# EUROPÄISCHE PATENTSCHRIFT

(11) **EP 0 620 372 B1**
(45) Veröffentlichungstag und Bekanntmachung des Hinweises auf die Patenterteilung: **30.09.1998**
(21) Anmeldenummer: 94105368.8
(22) Anmeldetag: 07.04.1994
(51) Int. Cl.: F15B 15/28

(54) **Druckmittelbetätigter Arbeitszylinder**
Fluid powered cylinder
Vérin à fluide sous pression

(30) Priorität: 15.04.1993 DE 9305640 U
(43) Veröffentlichungstag der Anmeldung: 19.10.1994
(73) Patentinhaber: HYDRAULIK TECHNIEK, NL-7826 TA Emmen (NL)
(72) Erfinder: Büter, Josef, W-49733 Haren (DE)
(74) Vertreter: Busse & Busse Patentanwälte

(56) Entgegenhaltungen:
- EP-A- 0 280 980
- DE-A- 3 015 258
- DE-A- 4 137 586
- FR-A- 2 182 363

## Beschreibung

Die Erfindung bezieht sich auf einen druckmittelbetätigten Arbeitszylinder gemäß dem Oberbegriff des Anspruchs 1.

Bei bekannten druckmittelbetätigten Arbeitszylindern (DE-OS 37 34 525 A1) ist für eine berührungslose Positionserfassung eines eine Hubbewegung innerhalb des Arbeitszylinders ausführenden Arbeitskolbens eine Schaltanordnung vorgesehen, deren auf ein Magnetfeld eines auf dem Arbeitskolben befindlichen Dauermagneten ansprechendes Schaltglied über eine Klemmvorrichtung am Außenumfang des Zylinders festgelegt ist, so daß damit sowohl der technische Aufwand bei der Herstellung als auch der Raumbedarf beim Einbau unter beengten Platzverhältnissen nachteilig erhöht sind. Gemäß FR-A-2 182 363 ist ein magnetisch ansprechendes Schaltglied in der Wandung eines Zylinderkörpers vorgeschlagen, wobei eine aus Titan bestehende Aufnahmebuchse in einer Durchgangsbohrung der Zylinderwandung eingebracht ist. Die Aufnahmebuchse weist umfangseitig eine Ringnut zur Aufnahme eines eine bereichsweise Abdichtung des Verbindungsspaltes bewirkenden Dichtungsringes auf, der jedoch zum Innenumfang des Zylinderkörpers hin einen Ringspalt beläßt, in dessen Bereich der bewegliche Arbeitskolben erhöhtem Verschleiß ausgesetzt und der Arbeitszylinder in seiner Funktionssicherheit nachteilig beeinflußt ist.

Der Erfindung liegt die Aufgabe zugrunde, einen druckmittelbetätigten Arbeitszylinder der eingangs angegebenen Art zu schaffen, dessen mit baulich einfachen Mitteln am Arbeitszylinder angeordnetes Schaltglied auch unter rauhen Einsatzbedingungen eine wartungsfreie und sichere Erfassung der Arbeitskolbenposition ermöglicht.

Die Erfindung löst diese Aufqabe durch einen druckmittelbetätigten Arbeitszylinder mit den Merkmalen des Anspruchs 1. Hinsichtlich wesentlicher weiterer Ausgestaltungen wird auf die Ansprüche 2 bis 8 verwiesen.

Der erfindungsgemäß ausgebildete Arbeitszylinder weist im Bewegungsbereich des Arbeitskolbens in einer Wanddurchbrechung ein nichtmagnetisierbares Füllglied auf, das mit geringem technischem Aufwand über eine Schweißverbindung in die Zylinderwandung integriert ist und ohne nachteilige Störeinflüsse mittels des außenliegenden Schaltgliedes eine empfindliche Schaltsignalerzeugung ermöglicht. Im Bereich des Füllgliedes ist mit einem geringen radialen Schaltabstand das auf dem Arbeitskolben befindliche Magnetteil nahe an der inneren Zylinderwandung bewegbar und die Kolben-Zylinder-Einheit weist insgesamt eine vorteilhaft geringe Vergrößerung der Radialabmessungen auf.

In zweckmäßiger Ausführungsform ist das Füllglied als eine Aufnahmebuchse ausgebildet, in die das Schaltglied bis in einen eine geringe Materialdicke aufweisenden Bodenwandbereich einbringbar ist. Dieser Bodenwandbereich weist eine dem Zylinderinnenraum radial angepaßte Außenkontur auf und im Bereich der Wanddurchbrechung ist ein spalt- und kantenfreier Übergang zur inneren Umfangsfläche geschaffen, so daß der nachfolgend montierte Arbeitskolben bzw. das auf diesem befindliche Magnetteil gleitend an der Bodenseite der Aufnahmebuchse in die Signalauslöseposition bewegt werden kann und diese Schaltglied-Anbindung auch unter rauhen Betriebsbedingungen weitgehend wartungsfrei ist.

Weitere Einzelheiten und Vorteile der Erfindung ergeben sich aus der nachtolgenden Beschreibung und der Zeichnung, die ein Ausführungsbeispiel eines erfindungsgemäßen Arbeitszylinders schematisch veranschaulicht. In der Zeichnung zeigen:
- Fig. 1: eine geschnittene Darstellung des erfindungsgemäßen Arbeitszylinders mit einer nahe eines Zylindersbodens vorgesehenen Aufnahmebuchse,
- Fig. 2: eine vergrößerte Ausschnittsdarstellung des Arbeitszylinders mit der Aufnahmebuchse in einer Vormontagestellung, und
- Fig. 3: eine vergrößerte Ausschnittsdarstellung ähnlich Fig. 2 mit einem Schaltglied in der Aufnahmebuchse.

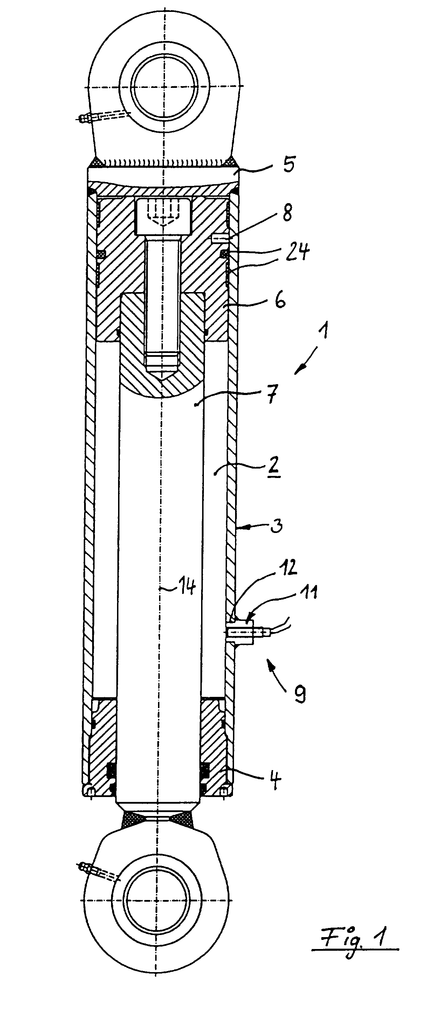

In Fig. 1 ist ein insgesamt mit 1 bezeichneter Arbeitszylinder in einer teilweise geschnittenen Darstellung veranschaulicht, der mit einem im Innenraum 2 eines Zylinderkörpers 3 über ein Fluid, z.B. Hydrauliköl, aus einer ersten Hubstellung im Bereich des Zylinderkopfes 4 in eine Richtung zum Bereich eines Zylinderbodens 5 hin in eine zweite Hubstellung beweglichen Arbeitskolben 6 versehen ist, der endseitig an einer Kolbenstange 7 festgelegt ist.

Dabei kann die jeweilige Hubbewegung über das Zusammenwirken eines auf dem Kolbenumfang des Arbeitskolbens 6 befindlichen Magnetteils 8 mit zumindest einem am Zylinderaußenumfang befindlichen Schaltglied 9 dadurch steuerbar sein, daß über dieses eine Zu- bzw. Abschaltung des Fluiddrucks erfolgt. Bei Anordnung eines weiteren Schaltglieds (nicht dargestellt) im Bereich des Zylinderbodens 5 ist mit geringem Aufwand eine Umschaltsteuerung erreichbar und ebenso ist denkbar, in axialer und/oder radialer Richtung mehrere Schaltglieder vorzusehen.

In vorteilhafter Ausbildung ist der Zylinderkörper 3 im Bewegungsbereich des Arbeitskolbens 6 mit zumindest einer den Zylinderinnenraum 2 mit dem Außenbereich verbindenden und über ein nichtmagnetisierbares Füllglied 11 fluiddicht verschlossenen Wanddurchbrechung 12 (Fig. 1) versehen, und nahe dieser am Zylinderaußenumfang das Schaltglied 9 angeordnet.

Damit kann der auf dem Arbeitskolben 6 befindliche Magnetteil 8 bei Annäherung in den Bereich des nichtmagnetisierbaren Füllgliedes 12 über einen hohen magnetischen Fluß eine Ansprecherregung zur Kontaktbetätigung des Schaltgliedes 9 bewirken. Durch eine Integration des nichtmagnetisierbaren Füllgliedes 11 in die Wandung des Zylinderkörpers 3 ist eine weitgehend unbeeinflußte Magnetfeldwirkung auf das Schaltglied 9 auch dann erreichbar, wenn der dieses umgebende Zylinderkörper 3 aus ferromagnetischem Material, z.B. Stahl, besteht.

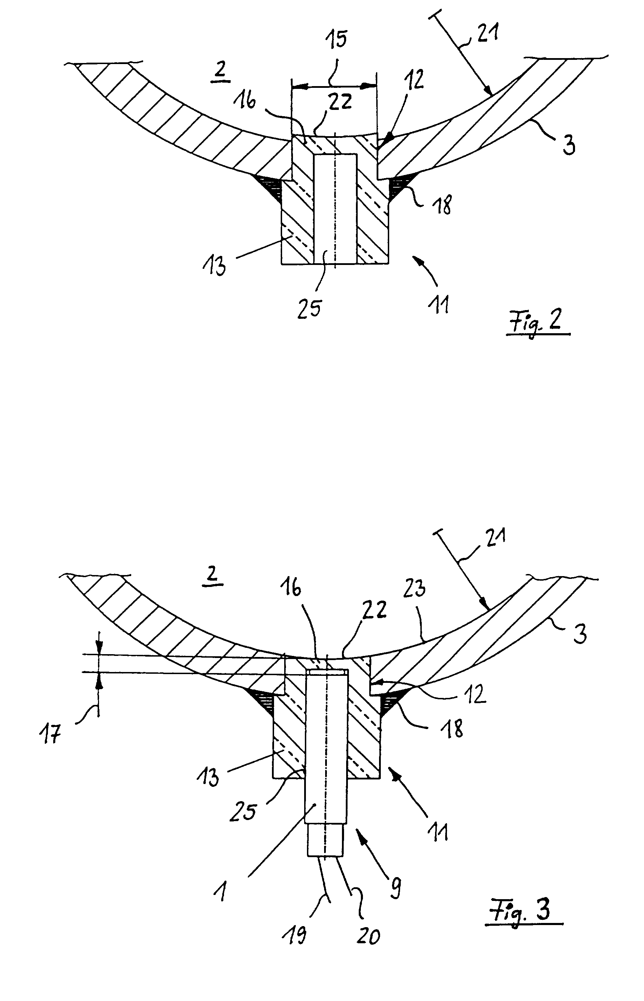

Die vergrößerten Ausschnittsdarstellungen gemäß Fig. 2 und Fig. 3 verdeutlichen, daß in zweckmäßiger Ausführung als Füllglied 11 eine das Schaltglied 9 zumindest bereichsweise abstützende, nichtmagnetisierbare Aufnahmebuchse 13 vorgesehen ist, die senkrecht zu einer Mittelebene 14 des Zylinderkörpers 3 über eine die Wanddurchbrechung 12 bildende Durchgangsbohrung 15 in die Zylinderkörperwandung eingebracht ist.

Damit kann der auf dem Arbeitskolben 6 befindliche Magnetteil 8 in eine das Schaltglied 9 beeinflussende Signalauslöseposition gebracht werden, die in einem Bodenbereich 16 der Aufnahmebuchse 13 einen vorteilhaft geringen Abstand 17 zum Schaltglied 9 aufweist.

Der Zylinderkörper 3 ist in zweckmäßiger Ausführung einem Stahlrohr, gebildet, der mit dem aus einem nicht magnetisierbaren Chromnickelstahl gebildeten Füllglied 11 mit geringem technischen Aufwand über eine Schweißverbindung 18 verbunden ist, wobei hier auch eine lösbare Schraubverbindung, eine Lötverbindung oder dgl. vorgesehen sein kann.

Als Schaltglied 9 ist in zweckmäßiger Ausführung ein Reed-Schalter 10 (Fig. 3) vorgesehen, der mit einem aus weichmagnetischem Kunststoff gebildeten Ringmagneten als das Magnetteil 8 auf dem Arbeitskolben 6 zusammenwirkt. Der Reed-Schalter 10 ist dabei über entsprechende, als Kabeldrähte ausgebildete Signalleitungen 19,20 mit einem Schaltorgan (nicht dargestellt) verbunden.

In Fig. 2 ist eine Vormontagestellung der Aufnahmebuchse 13 im Bereich der Zylinderkörperwandung 3 veranschaulicht, wobei die beiden Bauteile bereits über die Schweißverbindung 18 fluiddicht verbunden sind. Die in der Durchgangsbohrung 15 befindliche Aufnahmebuchse 13 kann dabei im Bodenbereich 16 eine dem Radius 21 des Zylinderkörpers 3 im Innenraum 2 weitgehend angepaßte Außenkontur 22 aufweisen, so daß keine weitere Bearbeitung notwendig ist.

In der gemäß Fig. 2 veranschaulichten Einbaulage steht jedoch die Aufnahmebuchse 13 mit ihrem Bodenbereich 16 in den Innenraum 2 vor, so daß im Bereich der Außenkontur 22 eine gemeinsame Bearbeitung mit der Umfangsfläche des Zylinderinnenraums 2 erforderlich ist, um einen weitgehend spalt- bzw. kantenfreien Übergangsbereich zwischen dem Zylinderkörper 3 und der Aufnahmebuchse 13 zu bilden.

In zweckmäßiger Ausführung ist für diese Endbearbeitung ein Schäl- und Roliervorgang vorgesehen, so daß der Zylinderkörper 3 danach im Bereich seiner inneren Umfangsfläche 23 und der Außenkontur 22 eine gleichmäßige Bogenform aufweist (Fig. 3) und damit ein erhöhter Reibungsverschleiß des Magnetteils 8 bzw. jeweiliger auf dem Arbeitskolben 6 befindlichen Dichtringe 24 beim Abgleiten des Arbeitskolbens 6 im Bereich der inneren Umfangsfläche 23 weitgehend vermieden ist.

Das als Reed-Schalter 10 ausgebildete Schaltglied 9 kann im Bereich einer Einführöffnung 25 der Aufnahmebuchse 13 über einfache Steckerverbindung positioniert werden oder in vorteilhafter Ausführung über ein elastisches Dämmaterial (nicht dargestellt) festgelegt sein, mit dem sowohl eine spritzwassergeschützte Halterung gebildet als auch eine Dämpfungsfunktion erreichbar ist. Ebenso ist denkbar, in die Einführöffnung 25 einen Elastomerring (nicht dargestellt) einzubringen, der eine hinreichend stabile Festlegung des Schaltgliedes 11 bildet und dessen Auswechselung ohne zusätzliche Hilfsmittel ermöglicht.

## Patentansprüche

1. Druckmittelbetätigter Arbeitszylinder, der mit einem im Innenraum (2) eines Zylinderkörpers (3) über ein Fluid aus einer ersten Hubstellung im Bereich eines Zylinderkopfes (4) in eine Richtung zum Bereich eines Zylinderbodens (5) hin in eine zweite Hubstellung beweglichen, zumindest eine Kolbenstange (7) aufweisenden Arbeitskolben (6) versehen ist, wobei dessen jeweilige Hubbewegung über das Zusammenwirken eines auf dem Kolbenumfang befindlichen Magnetteils (8) mit zumindest einem am Zylinderaußenumfang befindlichen Schaltglied (9) steuerbar ist, **dadurch gekennzeichnet,** daß der Zylinderkörper (3) im Bewegungsbereich des Arbeitskolbens (6) mit zumindest einer den Zylinderinnenraum (2) mit dem Außenbereich verbindenden und über ein nichtmagnetisierbares Füllglied (11) in Gestalt einer Aufnahmebuchse (13) fluiddicht verschlossenen Wanddurchbrechung (12) ausgebildet und nahe dieser am Zylinderaußenumfang das Schaltglied (9) vorgesehen ist, die Aufnahmebuchse (13) mit dem Zylinderkörper (3) verschweißt ist, im Bodenbereich (16) eine dem Radius (21) des Zylinderinnenraumes (2) weitgehend angepaßte Außenkontur (22) aufweist und einen spaltfreien Übergang zur inneren Umfangsfläche (23) bildet.

2. Druckmittelbetätigter Arbeitszylinder nach Anspruch 1, dadurch gekennzeichnet, daß mit der Hubbewegung des Arbeitskolbens (6) der auf diesem befindliche Magnetteil (8) in eine das Schaltglied (9) beeinflussende Signalauslöseposition nahe einem Bodenbereich (16) der Aufnahmebuchse (13) verbringbar ist.

3. Druckmittelbetätigter Arbeitszylinder nach Anspruch 1 oder 2, dadurch gekennzeichnet, daß der Zylinderkörper (3) aus einem magnetisierbaren Werkstoff wie Stahl und das Füllglied (11) aus nichtmagnetisierbarem Chromnickelstahl besteht.

4. Druckmittelbetätigter Arbeitszylinder nach einem der Ansprüche 1 bis 3, dadurch gekennzeichnet, daß als Schaltglied (9) ein Reed-Schalter (10) vorgesehen ist.

5. Druckmittelbetätigter Arbeitszylinder nach einem der Ansprüche 1 bis 4, dadurch gekennzeichnet, daß der Magnetteil (8) als ein aus weichmagnetischem Kunststoff gebildeter Ringmagnet vorgesehen ist.

6. Druckmittelbetätigter Arbeitszylinder nach einem der Ansprüche 1 bis 5, dadurch gekennzeichnet, daß die Aufnahmebuchse (13) im Bereich der Außenkontur (22) gemeinsam mit dem Innenumfang des Zylinderkörpers (3) bearbeitet ist.

7. Druckmittelbetätigter Arbeitszylinder nach einem der Ansprüche 1 bis 6, dadurch gekennzeichnet, daß der Reed-Schalter (10) im Bereich einer Einführöffnung (25) der Aufnahmebuchse (13) über ein elastisches Dämmaterial festgelegt ist.

8. Druckmittelbetätigter Arbeitszylinder nach Anspruch 7, dadurch gekennzeichnet, daß in der Einführöffnung (25) ein den Reed-Schalter (10) festlegender Elastomerring vorgesehen ist.

## Claims

1. A working cylinder actuated by a pressurised medium and provided with a working piston (6) comprising at least one piston rod (7) and adapted to be moved by a fluid out of a first position in the region of a cylinder head (4) in a direction towards the area of a cylinder bottom (5) and into a second position, its respective travelling movement being controllable by the co-operation of a magnetic part (8) disposed on the periphery of the piston with at least one switching member (9) disposed on the outside periphery of the cylinder, characterised in that in the area of movement of the working piston (6), the cylinder body (3) is constructed with at least one wall aperture (12) which connects the cylinder interior (2) to the outside area and which is occluded in fluid-tight manner by a non-magnetisable filling member (11) in the form of a receiving bush (13), the switching member (9) being provided close to this, on the outer periphery of the cylinder, the receiving bush (13) being welded to the cylinder body (3) and having in the region (16) of the bottom an outer contour (22) which is substantially adapted to the radius (21) ofthe cylinder interior (2), forming a gap-free transition to the inner peripheral surface (23).

2. A working cylinder actuated by a pressurised medium, according to claim 1, characterised in that with the lifting movement of the working piston (6), the magnetic part (8) disposed thereon can be moved into a signal triggering position which influences the switching member (9) and which is close to the bottom area (16) of the receiving bush (13).

3. A working cylinder actuated by a pressurised medium, according to claim 1 or 2, characterised in that the cylinder body (3) consists of a magnetisable material such as steel and in that the filling member (11) consists of non-magnetisable chrome nickel steel.

4. A working cylinder actuated by a pressurised medium, according to one of claims 1 to 3, characterised in that a reed switch (10) is provided as the switching member (9).

5. A working cylinder actuated by a pressurised medium, according to one of claims 1 to 4, characterised in that the magnetic part (8) is provided as a ring magnet formed from soft-magnetic synthetic plastics material.

6. A working cylinder actuated by a pressurised medium, according to one of claims 1 to 5, characterised in that the receiving bush (13) is in the region of the outer contour (22) machined jointly with the inner periphery of the cylinder body (3).

7. A working cylinder actuated by a pressurised medium, according to one of claims 1 to 6, characterised in that the reed switch (10) is fixed by an elastic damping material in the region of an insertion aperture (25) of the receiving bush (13).

8. A working cylinder actuated by a pressurised medium, according to claim 7, characterised in that an elastomer ring is provided in the insertion aperture (25) and secures the reed switch (10).

## Revendications

1. Vérin à fluide sous pression comprenant un piston de travail présentant au moins une tige de piston (7) d'un piston mobile (6) à l'intérieur d'un espace interne (2) d'un corps de vérin (3) se déplaçant par le biais d'un fluide, à partir d'une première position d'élévation, dans la zone de la tête du vérin (4) en direction de la zone d'une base de vérin (5) vers une deuxième position d'élévation, dans laquelle chaque position d'élévation peut être commandée par l'action commune d'une partie aimantée (8) placée sur la périphérie du piston, avec au moins un élément de commutation (9) placé sur le pourtour externe du vérin, caractérisé en ce que le corps du vérin (3) dans la zone mobile du vérin à fluide (6), est formé au moins d'une brèche de paroi (12) rendue étanche aux fluides qui relie l'espace interne du vérin (2) au pourtour externe au moyen d'un élément de remplissage non magnétisable (11) sous la forme d'un coussinet de palier (13), et à proximité de la brèche de paroi est prévu l'élément de commutation (9), le coussinet de palier (13) étant soudé au corps du cylindre (3), qui présente dans la zone de la base (16) un pourtour externe (22) parfaitement adapté à la périphérie (21) de l'espace interne du vérin (2) et forme un passage sans fente vers le pourtour interne (23).

2. Vérin à fluide sous pression suivant la revendication 1, caractérisé en ce que, au moyen du mouvement d'élévation du vérin à fluide (6), la partie aimantée (8) se trouvant sur celui-ci, proche d'une zone de base (16) du coussinet de palier (13) peut être déplacée dans une position de déclenchement de signal de l'élément de commutation (9).

3. Vérin à fluide sous pression suivant la revendication 1 ou 2, caractérisé en ce que le corps du vérin (3) est composé d'un matériau magnétisable tel l'acier et l'élément de remplissage (11) d'acier nickel-chrome non magnétisable.

4. Vérin à fluide sous pression suivant l'une quelconque des revendications 1 à 3, caractérisé en ce qu'un commutateur Reed (10) fait office d'élément de commutation (9).

5. Vérin à fluide sous pression suivant l'une quelconque des revendications 1 à 4, caractérisé en ce que la partie aimantée (8) est prévue sous la forme d'un aimant torique d'un matériau magnétique en plastique mou.

6. Vérin à fluide sous pression suivant l'une quelconque des revendications 1 à 5, caractérisé en ce que le coussinet de palier (13) a fait l'objet d'un traitement dans la zone du pourtour extérieur (22) au même titre que la partie interne du corps du vérin à fluide (3).

7. Vérin à fluide sous pression suivant l'une quelconque des revendications 1 à 6, caractérisé en ce que le commutateur Reed (10) est fixé dans la zone d'un alésage d'introduction (25) du coussinet de palier (13) par un matériau isolant élastique.

8. Vérin à fluide sous pression suivant la revendication 7, caractérisé en ce qu'un anneau en élastomère est prévu pour fixer le commutateur Reed (10) dans l'alésage d'introduction (25).
